(19) Europäisches Patentamt
European Patent Office
Office européen des brevets

(11) **EP 2 434 680 B1**

(12) # EUROPEAN PATENT SPECIFICATION

(45) Date of publication and mention
of the grant of the patent:
**15.08.2018 Bulletin 2018/33**

(51) Int Cl.:
*H04L 1/00* (2006.01)    *H04L 1/18* (2006.01)

(21) Application number: **10801872.2**

(86) International application number:
**PCT/CN2010/071659**

(22) Date of filing: **09.04.2010**

(87) International publication number:
**WO 2011/009312 (27.01.2011 Gazette 2011/04)**

(54) **METHOD AND DEVICE FOR UPLINK RETRANSMISSION DECISION**

VERFAHREN UND VORRICHTUNG ZUR ENTSCHEIDUNG ÜBER
UPLINK-NEUÜBERTRAGUNGEN

PROCÉDÉ ET DISPOSITIF DE DÉCISION DE RÉÉMISSION EN LIAISON MONTANTE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **21.07.2009 CN 200910088861**

(43) Date of publication of application:
**28.03.2012 Bulletin 2012/13**

(73) Proprietor: **Sanechips Technology Co., Ltd.
Shenzhen, Guangdong 518055 (CN)**

(72) Inventor: **BI, Min
Shenzhen
Guangdong 518057 (CN)**

(74) Representative: **AWA Sweden AB
Junkersgatan 1
582 35 Linköping (SE)**

(56) References cited:
WO-A1-2008/053731    CN-A- 1 411 244
CN-A- 1 493 126    CN-A- 101 072 085
CN-A- 101 359 972

- **"3rd Generation Partnership Project; Technical
  Specification Group Radio Access Network;
  Physical layer procedures (TDD) (Release 8)",
  3GPP STANDARD; 3GPP TS 25.224, 3RD
  GENERATION PARTNERSHIP PROJECT (3GPP),
  MOBILE COMPETENCE CENTRE ; 650, ROUTE
  DES LUCIOLES ; F-06921 SOPHIA-ANTIPOLIS
  CEDEX ; FRANCE, no. V8.4.0, 1 May 2009
  (2009-05-01), pages 1-79, XP050367157,**
- **CATT: "E-AGCH structure in CPC for LCR TDD",
  3GPP DRAFT; R1-084215, 3RD GENERATION
  PARTNERSHIP PROJECT (3GPP), MOBILE
  COMPETENCE CENTRE ; 650, ROUTE DES
  LUCIOLES ; F-06921 SOPHIA-ANTIPOLIS
  CEDEX ; FRANCE, no. Prague, Czech Republic;
  20081104, 4 November 2008 (2008-11-04),
  XP050317502, [retrieved on 2008-11-04]**

**Description**

Technical Field

The present invention relates to the art of communication technologies, especially, to a method and device for enhanced uplink retransmission decision in time division synchronous code division multiple access system.

Background of the Related Art

In the third generation mobile communication system, in order to provide higher speed uplink packet services and improve spectrum efficiency, high speed uplink packet access (HSUPA) technology, that is, the enhanced technology is introduced in the 3rd Partnership Project (3GPP). The introduction of the HSUPA technology is used to effectively support video, multimedia, data upload, and other IP-based services.

The HSUPA service can be divided into scheduling transmission and non-scheduling transmission in accordance with different transmission methods, wherein, for the non-scheduling transmission, the Serving Radio Network Controller (SRNC) configures the user equipment (UE) with the physical channel bearer resources for uplink transmission, and the configuration method is the same as the existing method for configuring the dedicated resources; for the scheduling transmission, SRNC first configures the NodeB with the maximum service resource pool applied by the UE, and the NodeB dynamically allocates the physical bearer resources to the enhanced uplink service according to the quality of service (Qos) of the UE and the network link quality.

When the SRNC configures a transmission time interval (TTI) as non-scheduling transmission, the UE can use the allocated resources to transmit data at any time without the Node B scheduling permission, this transmission method can avoid additional signaling overhead and scheduling delay, wherein, a typical example of applying the non-scheduling transmission method to transmit data is the signaling and the flow service in which the rate is guaranteed.

When the SRNC configures one TTI as scheduling transmission, the SRNC first allocates the enhanced uplink physical channel resource pool for the maximum scheduling transmission to the UE, and sends this allocation to the NodeB, then the NodeB applies the dynamic scheduling method to allocate the granted uplink physical channel resources to the UE according to the Qos of the UE and the air interface link quality. Wherein, any of the transmissions of new data and retransmitted data may be sent only by getting this network grant permission.

When it is the scheduling transmission, the network grant is sent with the bit information carried in the uplink enhanced absolute grant channel (E-AGCH), wherein, there are the following types of bit information carried in the E-AGCH:

Power Resource Related Information (PRRI): 5 bits, used to indicate the ratio of the maximum network grant transmission power available in the UE enhanced physical uplink channel (E-PUCH) to the reference power in a resource unit, that is, a code channel whose spreading factor is 16;

Code Resource Related Information (CRRI): 5 bits, indicating the code channel and the spreading factor used in the E-PUCH transmission;

TimeSlot Resource Related Information (TRRI): 5 bits, corresponding to time slot 1 to time slot 5, indicating the E-PUCH transmission time slot;

E-PUCH transmission Resource Duration Indicator (RDI): 3 bits/0 bit, an option, the introduction of RDI is to decrease the scheduling frequency;

E-AGCH Cyclic Sequence Number (ECSN): 3 bits, used to calculate the block error rate of the E-AGCH and the outer ring power control.

Enhanced uplink Hybrid Automatic repeat request indicator channel indicator (EI, E-HICH Indicator): 2 bits, used to indicate the applied enhanced uplink hybrid automatic repeat request indicator channel (E-HICH).

Control channel indicator of enhanced uplink dedicated channel (ENI, E-UCCH Number Indicator): 3 bits, used to indicate the channel number of the enhanced uplink dedicated channel control channels (E-UCCH).

Wherein the parameter limiting the size of the transmitting data block mainly is: PRRI, it is used to control the effect on the transmit power due to the transmitting data amount, since the network has limits on the maximum allowed transmit power of each UE, the network can control the size of the E-PUCH data block sent by the UE according to the PRRI value, so as to limit the data block of each scheduling transmission; the parameters CRRI, TRRI and ENI are used to control the carrier resources for the air interface transmission of any E-PUCH data, both new data and the to-be-retransmitted data must be limited by these physical carriers. Wherein, the E-PUCH data block is referred to as MAC-e PDU.

A key technology in the enhanced uplink system is the fast retransmission technology (HARQ), and the UE needs to judge the transmission grant according to the information carried in the enhanced absolute grant channel (E-AGCH) at the network side, preferably retransmit the E-PUCH data block of a certain process that is already transmitted in the buffer but indicated as NACK by the NodeB via the E-HICH; therefore, the NodeB at the receiving end soft-combines and channel decode the received data of the same process. The aforementioned retransmission technology is controlled in the NodeB, and there is no need for the retransmission in the radio link controller (RLC) layer via the Iub interface, functions such as fast scheduling and increased system throughput can be achieved. However, if the HARQ retransmission of the NodeB reaches the maximum retransmission times or the retransmission timer expires, the data that are not transmitted correctly can only be retransmitted via the RLC layer. Wherein, the Iub interface is the interface between the NodeB and the RNC.

Therefore, HARQ retransmission decision is crucial, 3GPP specifies that in the scheduling transmission, the retransmission of the old data can be considered in advance, after the network grant information is acquired. Only if the retransmission of the old data cannot be met, the transmission of the new data can be considered. But there is no standard advisement for the retransmission decision.

The document, "3rd Generation Partnership Project; Technical Specification Group Radio Access Network; Physical layer procedures (TDD) (Release 8)", discloses that, during the operation of the uplink power control procedure, the UE transmit power shall not exceed a maximum allowed value which is the lower out of the maximum output power of the terminal power class and a value which may be set by higher layer signaling.

The document "E-AGCH structure in CPC for LCR TDD (2008-11-04)" discloses that Node B can assign/re-assign the semi-persistent physical resources and explicit commands can be used to reconfigure resources to handle voice traffic patterns.

Content of the Invention

The purpose of the technical scheme of the present invention is to provide a method and device for uplink retransmission decision to make user equipment (UE) execute fast and accurate retransmission decision according to the information provided by the enhanced absolute grant channel (E-AGCH) of a NodeB, to guarantee that the to-be-retransmitted data based on hybrid automatic repeat request (HARQ) and fast scheduling can be transmitted.

To achieve the aforementioned purpose, one aspect of the present invention is to provide a method according to claim 1 and an uplink retransmission decision device for an uplink retransmission decision according to claim 7. Further improvements and embodiments are provided in the dependent claims. Embodiments that do not fall under the scope of the claims are useful to understand the invention. At least one of the aforementioned technical schemes has the following beneficial effects:

The method and device provides a standard uplink retransmission decision method to acquire the technical effects of fast and accurate retransmission decision by analyzing the information carried in the E-AGCH and sent by the NodeB;

With the method and the device, when the NodeB dynamically changes the transmission carrier resources such as the CRRI, the ENI, and the modulation mode due to the change of the wireless link quality, flexible decision can be made so that the to-be-retransmitted data can be transmitted as much as possible, thus improve the overall system throughput and delay.

Brief Description of Drawings

FIG. 1 is a flow chart of the method for uplink retransmission decision in accordance with the present invention;
FIG. 2 is a flow chart of the first method embodiment in the present invention;
FIG. 3 is a fold line relationship diagram between the code rate and the reference power in the QPSK mode and the 16QAM mode;
FIG. 4 is a structural diagram of the device in accordance with a specific embodiment of the present invention.

Preferred Embodiments of the Present Invention

In order to make the purposes, technical schemes and advantages of the present invention more clearly, the present invention will be described in detail in the following with combination of the accompanying figures and the specific embodiments.

The method and device for uplink retransmission decision in the present invention analyze the carried information provided in the E-AGCH and sent by the NodeB to achieve the technical effects of fast and accurate retransmission decision, so as to ensure that the to-be-retransmitted data based on the HARQ and the fast scheduling can be transmitted.

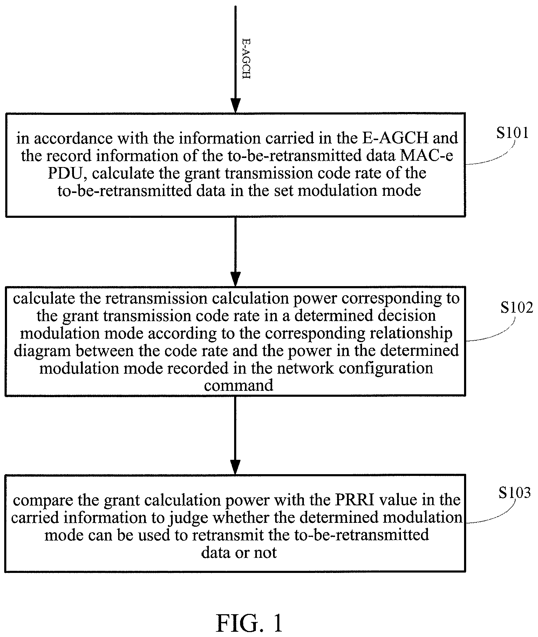

FIG. 1 is a flow chart of the method for uplink retransmission decision in accordance with the present invention, the method implements the uplink retransmission decision with a retransmission decision device, refer to FIG. 1, the method comprises the following steps:

step S101, when the retransmission decision device receives the data sent from the E-AGCH, acquiring and analyzing the carried information in the data, where the carried information comprises the PRRI, the CRRI, the TRRI, the RDI, the ECSN, the EI and the ENI; and acquiring the record information of the to-be-retransmitted data MAC-e PDU in the network, and the to-be-retransmitted data are the data of the oldest process in the buffered to be retransmitted sequence, the record information comprises the data block size $S_e$ of the to-be-retransmitted data MAC-e PDU and the HARQ Profile corresponding to the to-be-retransmitted data MAC-e PDU.

In step S101, in accordance with the information carried in the E-AGCH and the record information of the to-be-retransmitted data MAC-e PDU, calculating the grant transmission code rate $\lambda_e$ of the to-be-retransmitted data in the pending decision modulation mode.

Step S102, the retransmission decision device calculating the grant calculation power corresponding to the grant transmission code rate $\lambda_e$ in the pending decision modulation mode according to the corresponding relationship between the code rate and the power in the pending decision modulation mode recorded in the network configuration command.

Step S103, the retransmission decision device comparing the grant calculation power with the PRRI value in the carried information to judge whether the decision modulation mode can be used to retransmit the to-be-retransmitted data or not.

The specific process of this step is: when determining that the PRRI value is larger than the grant calculation power, determining that the to-be-retransmitted data can be retransmitted with the pending decision modulation mode, otherwise, determining that the to-be-retransmitted data cannot be retransmitted with the pending decision modulation mode

Those skilled in the field understand that, in the Time Division Synchronous Code Division Multiple Access system, the modulation mode for data transmission comprises the QPSK mode and the 16QAM mode including 16 characters, therefore, in the uplink retransmission decision process, when determining the transmission modulation mode for data retransmission, it needs to judge the QPSK mode and the 16QAM mode simultaneously to determine which modulation mode is more suitable for the transmission of the to-be-retransmitted data.

Therefore, in the aforementioned steps S101 to S103, the pending decision modulation modes comprise the QPSK mode and the 16QAM mode, it needs to respectively calculate and acquire the first grant transmission rate and the second grant transmission rate in the QPSK mode and the 16QAM mode in step S101; respectively calculating and acquiring the first grant calculation power corresponding to the first grant transmission code rate and the second grant calculation power corresponding to the second grant transmission code rate in step S102.

In step S103, after the retransmission decision device determines that both the QPSK mode and the 16QAM mode can be used to retransmit the to-be-retransmitted data, the retransmission decision device comparing the first grant calculation power and the second grant calculation power, and selecting the modulation mode corresponding to the smaller one in the first grant computation power and the second grant computation power to retransmit the to-be-retransmitted data.

In addition, those skilled in the field understand that, since the maximum rate $\lambda_{max}$ and the minimum rate $\lambda_{min}$ for the uplink data transmission and retransmission are set in the network configuration command, therefore, after acquiring the grant transmission rate $\lambda_e$ of the to-be-retransmitted data in the pending decision modulation mode in step S101, it needs to further judge whether the grant transmission code rate $\lambda_e$ meets the data transmission conditions set in the network configuration command or not; and since in the Time Division Synchronous Code Division Multiple Access system, the data retransmission is limited by one-third rate, when the rate is less than one-third, the E-AGCH grant cannot be used to retransmit the data, therefore, after calculating and acquiring the grant transmission code rate $\lambda_e$ in step S101, it also needs to further judge whether the grant transmission code rate $\lambda_e$ is less than one third or not, thus to judge whether the E-AGCH grant can be used to retransmit the data or not in the pending decision modulation mode.

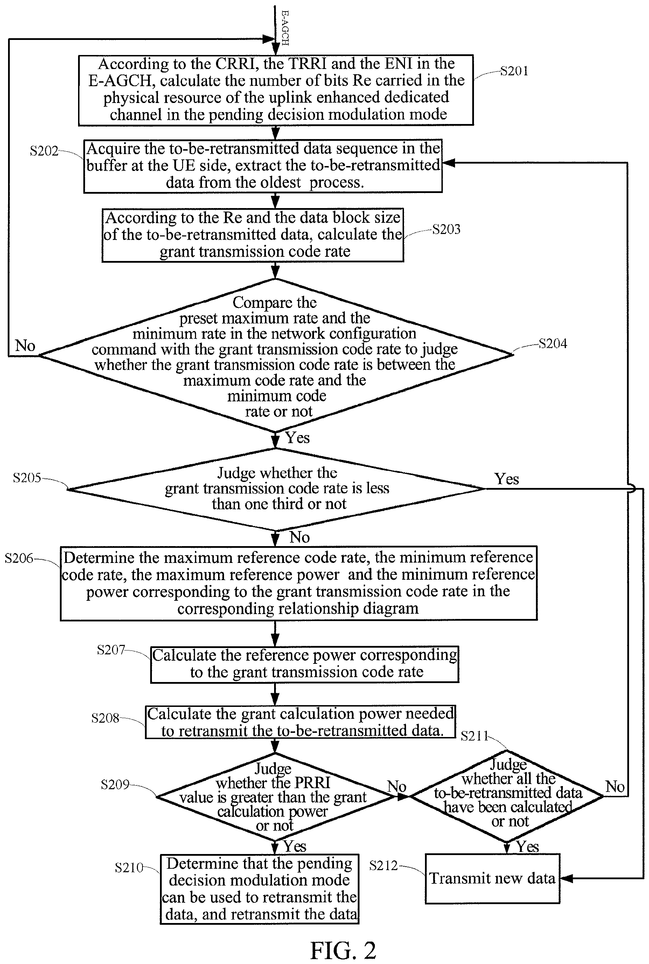

FIG. 2 is a flow chart of the first method embodiment of the present invention, with combination of FIG. 2, the method of the present invention will be described in detail in the following.

Refer to FIG. 2, in the first method embodiment of the present invention, a retransmission decision device is used to achieve the uplink retransmission decision process, and the method comprises:

Step S201, acquiring the information carried in the E-AGCH, according to the CRRI, the TRRI and the ENI in the carried information, calculate the number of bits $R_e$ carried in the physical resource in the pending decision modulation mode.

In this step, the pending decision modulation mode is the QPSK mode or the 16QAM mode, when the pending decision modulation modes are the QPSK mode and the 16QAM mode, the formulas calculating the number of bits $R_e$ carried in the physical resources are respectively as follows, wherein, the SF is the spreading factor determined according to the CRRI, and the timeslot num is the number of transmission code channels determined according to the TRRI.

For the QPSK modulation mode, the formula (I) for calculating the number of bits $R_e$ carried in the physical resources is as follows:

When

$$\text{SF=1:} \quad R_e = (88 \times 16 \times \text{timeslot\_num}) - (\text{ENI} + 1) \times 34$$

When

$$\text{SF=2:} \quad R_e = (88 \times 16 \times \text{timeslot\_num})/2 - (1 + \text{ENI}) \times 34$$

When

$$\text{SF=4:} \quad R_e = (88 \times 16 \times \text{timeslot\_num})/4 - (1 + \text{ENI}) \times 34$$

When

$$\text{SF=8:} \quad R_e = (88 \times 16 \times \text{timeslot\_num})/8 - (1 + \text{ENI}) \times 34$$

When

$$\text{SF=16:} \quad R_e = (88 \times 16 \times \text{timeslot\_num})/16 - (1 + \text{ENI}) \times 34$$

For 16QAM modulation mode, the formula (II) for calculating the number of bits $R_e$ carried in the physical resources is as follows:

When

$$\text{SF=1:} \quad R_e = (176 \times 16 \times \text{timeslot\_num}) - (\text{ENI} + 1) \times 34 \times 2$$

When

$$\text{SF=2:} \quad R_e = (176 \times 16 \times \text{timeslot\_num})/2 - (\text{ENI} + 1) \times 34 \times 2$$

When

$$\text{SF=4:} \quad R_e = (176 \times 16 \times \text{timeslot\_num})/4 - (\text{ENI} + 1) \times 34 \times 2$$

When

$$\text{SF=8:} \quad R_e = (176 \times 16 \times \text{timeslot\_num})/8 - (\text{ENI} + 1) \times 34 \times 2$$

When

$$\text{SF=16:} \quad R_e = (176 \times 16 \times \text{timeslot\_num})/16 - (ENI+1) \times 34 \times 2$$

Step S202, acquiring the to-be-retransmitted data sequence in the buffer at the UE side, extract the data to be retransmitted from the oldest process.

Step S203, according to the number of bits $R_e$ carried in the physical resources and the data block size $S_e$ of the to-be-retransmitted data MAC-e PDU acquired with the aforementioned formula, use the formula (1) to calculate the grant transmission code rate $\lambda_e$ of the to-be-retransmitted data MAC-e PDU in the pending decision modulation mode.

$$\lambda_e = S_e / R_e \qquad (1)$$

Step S204, compare the pre-set maximum rate $\lambda_{max}$ and the minimum rate $\lambda_{min}$ in the network configuration command with the grant transmission code rate $\lambda_e$ to judge whether the grant transmission code rate $\lambda_e$ meets the conditions in the formula (2) or not, that is, whether the grant transmission code rate $\lambda_e$ is between the maximum rate $\lambda_{max}$ and the minimum rate $\lambda_{min}$ or not, if no, determine that the E-AGCH grant can neither retransmit data nor transmit new data, and it needs to further interact with the network to reacquire the E-AGCH grant, return to S201; if yes, determine that the E-AGCH grant meets the data transmission conditions set in the network configuration command, proceed to step S205.

$$\lambda_{min} \le \lambda_e \le \lambda_{max} \qquad (2)$$

Step S205, judge whether the grant transmission code rate $\lambda_e$ is less than one third or not, if yes, determine that the E-AGCH grant does not meet the conditions for retransmitting the to-be-retransmitted data in the pending decision modulation mode, proceed to step S212, apply the new data transmission method to transmit the to-be-retransmitted data; if the judged result is no, otherwise determine that the E-AGCH grant meets the conditions for retransmitting the to-be-retransmitted data, proceed to step S206.

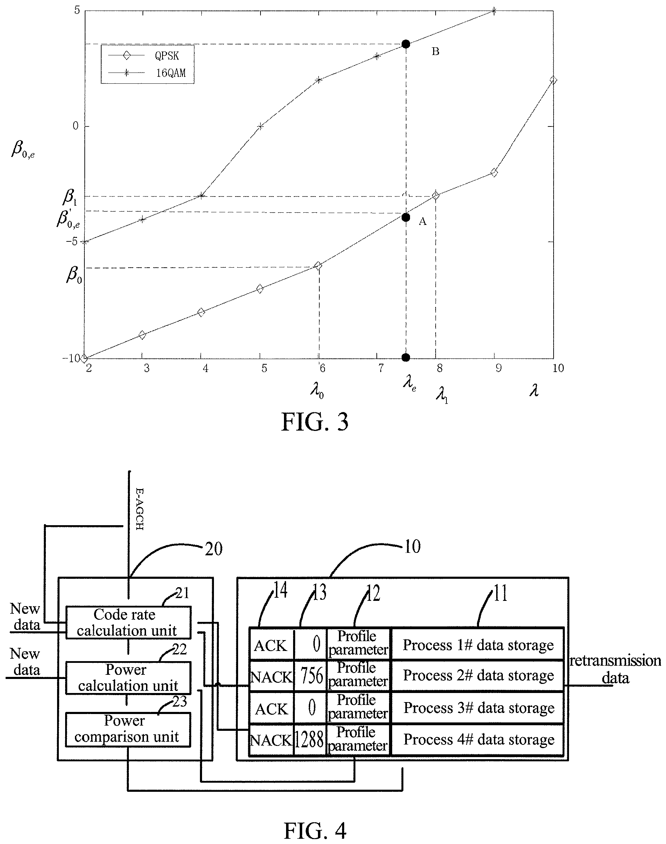

Step S206, acquire the corresponding relationship diagram that indicates the relationship between the code rate and the reference power and is corresponding to the pending decision modulation mode in the network configuration command, take the TD-SCDMA system for example, FIG. 3 is the fold line relationship diagrams of the code rate and the reference power in the modulation mode of QPSK and the 16QAM respectively.

First, determine that the grant transmission code rate $\lambda_e$ determined in step S203 corresponds to which linear section in the fold line corresponding relationship diagram shown in FIG. 3, and determine the maximum reference code rate $\lambda_0$, the minimum reference code rate $\lambda_1$, the maximum reference power $\beta_0$ and the minimum reference power $\beta_1$ corresponding to the grant transmission code rate $\lambda_e$ in the corresponding relationship diagram according to the linear relationship.

Step S207, calculate the reference power $\beta'_e$ corresponding to the grant transmission code rate $\lambda_e$ according to the linear interpolation formula (3), and the linear interpolation formula is:

$$\dot{\beta}_e = \beta_0 + \frac{\beta_1 - \beta_0}{\lambda_1 - \lambda_0}(\lambda_e - \lambda_0) dB \qquad (3)$$

Step S208, calculate the grant calculation power $\beta''_e$ needed to retransmit the to-be-retransmitted data.

According to the following standard formulas (4) and (5) in the 3GPP system, that is, the standard formulas in the 3gpp25.224 and the 3gpp25.321:

$$\beta_e = \beta_{0,e} + \alpha_e + \Delta_{harq} dB \qquad (4)$$

$$\beta_e = PRRI + \alpha_e \qquad (5)$$

the following formula can be acquired:

$$PRRI = \beta_{0,e} + \Delta_{harq} \quad (6)$$

Where $\beta_{0,e}$ is the reference power value, $\beta_e$ is the actual power value, $\alpha_e$ is the spreading factor corresponding to the spreading factor of the E-PUCH (SFE-PUCH), and $\alpha_e$ is a fixed value when the SFE-PUCH is determined, and $\Delta_{harq}$ is the HARQ Profile of the MAC-e PDU data, when the UE sends data and receives a NACK command from the network, it needs to save not only the original MAC-e PDU data but also the HARQ Profile value corresponding to each data.

With the aforementioned formula (6), it can be derived and calculated that the formula to calculate the grant calculation power $\beta''_e$ needed for the transmission of the to-be-retransmitted data MAC-e PDU can be determined as:

$$\beta''_e = \beta'_e + \Delta_{harq} \quad (7)$$

Step S209, according to the grant calculation power $\beta''_e$ acquired in Step S208, judge whether the PRRI value of the E-AGCH is greater than or equal to the grant calculation power $\beta''_e$ or not, and if yes, determine that the pending decision modulation mode can use the E-AGCH grant to retransmit the data, and proceed to step S210; otherwise, determine that the pending decision modulation mode cannot use the E-AGCH grant to retransmit the data, and proceed to step S211.

Step S210, Retransmit the data.

Step S211, Judge whether all the to-be-retransmitted data have been calculated or not, and if yes, proceed to step S212, if no, otherwise return to step S202 and re-acquire the to be transmitted data to calculate.

Step S212, Transmit new data

With steps S201 to S212 in the method of the present invention, analyze the carried information provided in the E-AGCH and sent by the NodeB to acquire the grant transmission code rate $\lambda_e$ of the to be transmitted data, and further judge whether the grant power value of the E-AGCH can be used to retransmit data or not in the pending decision modulation mode according to the grant transmission code rate $\lambda_e$, therefore, provide a standard uplink retransmission decision method to achieve the technical effects of fast and accurate retransmission decision, thus ensure that the to-be-retransmitted data based on the HARQ and the fast scheduling can be transmitted.

In addition, in the method of the present invention, when the NodeB dynamically changes resources such as the CRRI, the ENI, and the modulation mode due to the change of the wireless link quality, the decision can also be flexible so that the to-be-retransmitted data can be transmitted as much as possible to improve the system throughput and the delay.

Those skilled in the field should understand that, the pending decision modulation mode is the QPSK mode or the 16QAM mode, in the retransmission decision process of the Time Division Synchronous Code Division Multiple Access system, judge both the QPSK method and the 16QAM mode at the same time to choose the more appropriate mode to carry the to-be-retransmitted data.

Refer to FIG. 2 for the method in the specific embodiments of the present invention, when judging the QPSK and the 16QAM modulation modes at the same time, specifically:

In step S201, use the aforementioned formula (I) or formula (II) to calculate the number of bits $R_{e,QPSK}$ and $R_{e,16QAM}$ carried in the physical resources in the QPSK mode and the 16QAM mode respectively according to the CRRI, TRRI and ENI in the E-AGCH.

In step S203, use the formula (1) calculate the grant transmission code rates $\lambda_{e,QPSK}$ and $\lambda_{e,16QAM}$ of the to-be-retransmitted data MAC-e PDU in the QPSK mode and the 16QAM mode respectively.

In step 204, respectively compare the grant transmission code rates $\lambda_{e,QPSK}$ and $\lambda_{e,16QAM}$ with the maximum code rate $\lambda_{max}$ and the minimum code rate $\lambda_{min}$ preset in the network configuration command, and keep those in the grant transmission code rates $\lambda_{e,QPSK}$ and $\lambda_{e,16QAM}$ that are meet the grant transmission code rate in formula (2); if one of the grant transmission code rates $\lambda_{e,QPSK}$ and $\lambda_{e,16QAM}$ meets the condition of formula (2), that is, $\lambda_{min} \leq \lambda_{e,QPSK} \leq \lambda_{max}$ or $\lambda_{min} \leq \lambda_{e,16QAM} \leq \lambda_{max}$, then the transmission code rate and the modulation mode of the to-be-retransmitted data can be determined in step S204, that is, the one in the grant transmission code rates $\lambda_{e,QPSK}$ and $\lambda_{e,16QAM}$ that meets the grant transmission power and the modulation mode corresponding to formula (2) can be used to participate the retransmission decision from steps S205 to S212; if both $\lambda_{min} \leq \lambda_{e,QPSK} \leq \lambda_{max}$ and $\lambda_{min} \leq \lambda_{e,16QAM} \leq \lambda_{max}$ are met, keep both the grant transmission code rates, and at the same time, participate the retransmission decision from steps S205 to S212; if neither $\lambda_{min} \leq \lambda_{e,QPSK} \leq \lambda_{max}$ nor $\lambda_{min} \leq \lambda_{e,16QAM} \leq \lambda_{max}$ can be met, return to step S201.

In step S205, when it determines that both $\lambda_{min} \leq \lambda_{e,QPSK} \leq \lambda_{max}$ and $\lambda_{min} \leq \lambda_{e,16QAM} \leq \lambda_{max}$ are met in step S204, in the step S205, further compare $\lambda_{e,QPSK}$ and $\lambda_{e,16QAM}$ with the one-third respectively, and keep those in the grant transmission code rates $\lambda_{e,QPSK}$ and $\lambda_{e,16QAM}$ that are larger than one third; if one of the grant transmission code

rates $\lambda_{e,QPSK}$ and $\lambda_{e,16QAM}$ is larger than one third, then the transmission code rate and the modulation mode of the to-be-retransmitted data can be determined in this step, that is, the one in the grant transmission code rates $\lambda_{e,QPSK}$ and $\lambda_{e,16QAM}$ that is larger than one third and the corresponding modulation mode are used to participate the retransmission decision from steps S206 to S212; if the grant transmission code rates $\lambda_{e,QPSK}$ and $\lambda_{e,16QAM}$ are larger than one third at the same time, keep both the grant transmission code rates, and at the same time, participate the retransmission decision from steps S206 to S212; if the grant transmission code rates $\lambda_{e,QPSK}$ and $\lambda_{e,16QAM}$ are less than one third at the same time, return to step S212.

In step S207, when both $\lambda_{e,QPSK}$ and $\lambda_{e,16QAM}$ are determined larger than one third in step S205, use the corresponding fold line relationship diagrams between the code rate and the power in the QPSK mode and the 16QAM mode indicated in step S205 to respectively calculate the reference powers $\beta'_{e,QPSK}$ and $\beta'_{e,16QAM}$ respectively corresponding to the grant transmission code rates $\lambda_{e,QPSK}$ and $\lambda_{e,16QAM}$ with the formula (3) in the step S207.

In step S208, respectively calculate the grant calculation powers $\beta'_{e,QPSK}$ and $\beta''_{e,16QAM}$ needed for transmitting the to-be-retransmitted data with the QPSK mode and the 16QAM mode according to the formula (6).

In step S209, compare the grant PRRI value of the E-AGCH with the $\beta'_{e,QPSK}$ and $\beta'_{e,16QAM}$ respectively, when determining that the PRRI value is less than both the $\beta'_{e,QPSK}$ and the $\beta'_{e,16QAM}$, the E-AGCH grant cannot retransmit the to-be-retransmitted data, proceed to step S11; when determining that $PRRI \geq \beta''_{e,QPSK}$ or $PRRI \geq \beta''_{e,16QAM}$, the modulation mode which meets one of the inequalities is used to carry the retransmission of the to-be-retransmitted data; when determining that $PRRI \geq \beta''_{e,QPSK}$ and $PRRI \geq \beta''_{e,16QAM}$, determine that both the QPSK mode and the 16QAM mode can use the E-AGCH grant to retransmit the data, considering the effective use of the resource, step 209 needs to select the modulation mode corresponding to the smaller one in the $\beta''_{e,QPSK}$ and $\beta''_{e,16QAM}$ to bear the retransmission of the to-be-retransmitted data.

Therefore, according to the QPSK mode and the 16QAM mode, the method analyzes the carried information provided by the E-AGCH and sent by the NodeB, and selects the better one in the QPSK mode and the 16QAM mode to retransmit the data.

In addition, the other aspect of the present invention is to provide a uplink retransmission decision device for the uplink retransmission decision, FIG. 4 is a structural diagram of the device in accordance with a specific embodiment of the present invention.

Refer to FIG. 4, the uplink retransmission decision device comprises the memory module 10 and the calculation decision module 20, where the memory module 10 is used to store the to-be-retransmitted data of each process and the parameters related to the retransmission process, and the memory module 10 comprises:

the to be transmitted data memory unit 11, used to buffer the MAC-E PDU data of each process in the transmission scheduling, and after the UE sends these data, these data need to be buffered in the to be transmitted data memory unit 11, and the to be transmitted data memory unit 11 judges whether the data of each process need to be buffered or not or whether the process can be released to transmit new data or not according to the reception ACK (acknowledgement)/NACK indication in each process E-HICH fed back from the network.

the related information memory unit 12, used to store the record information of the profile parameters such as the HARQ profile parameter $\Delta_{HARQ}$, the retransmission serial number, the process number and the size of the retnramsisison data block of each process data sent by the UE.

the data retransmission timer unit 13, the unit takes millisecond as the timing unit, and is started when the data of a process are determined to be retransmitted, and the retransmission timer is reset to 0 after receiving the ACK from the network, it is used to determine the oldest process that is waiting for retransmission, so that the oldest process is transmitted with high priority when acquiring the network grant, only when the oldest process that is waiting for retransmission cannot be transmitted in the granted resource are the next oldest to-be-retransmitted process and the new data considered.

the instruction memory unit 14, used to store the ACK or NACK instruction corresponding to the to be transmitted data of each process.

In addition, the calculation decision module 20 is used to judge data retransmission or new data transmission by calculating the E-AGCH grant information granted by the network, where the calculation decision module 20 comprises:

the code rate calculation unit 21, used to acquire the information carried in the E-AGCH and the information stored in the memory module 10, according to the waiting time of each to be retransmitted process recorded by the data retransmission timer unit 13, acquire the to-be-retransmitted data of the oldest process, and according to the carried information and the data block size of the to-be-retransmitted data, calculate the grant transmission code rate $\lambda_e$ of

the to-be-retransmitted data in the pending decision modulation mode.

the power calculation unit 22, used to calculate the grant calculation power corresponding to the grant transmission code rate $\lambda_e$ in the pending decision modulation mode according to the corresponding relationship diagram between the power and the rate recorded in the network configuration command;

the power comparison unit 23, used to compare the grant calculation power with the PRRI in the carried information, when determining that the PRRI value is larger than the grant calculation power, determine that the to-be-retransmitted data can be retransmitted with the pending decision modulation mode, otherwise, determine that the to-be-retransmitted data cannot be retransmitted with the pending decision modulation mode.

In addition, the code rate calculation unit 21 is also used to compare the maximum rate $\lambda_{max}$ and the minimum rate $\lambda_{min}$ preset in the network configuration command with the grant transmission code rate $\lambda_e$ to judge whether the grant transmission code rate $\lambda_e$ meets the data transmission conditions set in the network configuration command or not, when the grant transmission code rates $\lambda_e$ in both the QPSK mode and the 16QAM mode do not meet the condition $\lambda_{min} \leq \lambda_e \leq \lambda_{max}$, determine that the E-AGCH grant can neither retransmit data nor transmit new data.

Furthermore, the code rate calculation unit 21 is also used to compare the grant transmission code rate $\lambda_e$ with the one third, when determining that the grant transmission codes $\lambda_e$ acquired in both the QPSK mode and the 16QAM mode are less than one third, determine that the to-be-retransmitted data can only use the new data transmission method rather than the E-AGCH grant to retransmit.

The steps of the power calculation unit 22 calculating the grant calculation power corresponding to the grant transmission code rate $\lambda_e$ specifically comprise:

acquiring the corresponding relationship diagram corresponding to the pending decision modulation mode, and determining the maximum reference code rate $\lambda_0$, the minimum reference code rate $\lambda_1$, the minimum reference power $\beta_0$ and the maximum reference power $\beta_1$ corresponding to the grant transmission code rate $\lambda_e$ in the corresponding relationship diagram;
calculating the reference power $\beta'_e$ corresponding to the grant transmission code rate $\lambda_e$ according to the linear interpolation formula, and said linear interpolation formula is:

$$\beta'_e = \beta_0 + \frac{\beta_1 - \beta_0}{\lambda_1 - \lambda_0}\left(\lambda_e - \lambda_0\right) dB$$

calculating the grant calculation power $\beta''_e$ according to the formula $\beta''_e = \beta'_e + \Delta_{harq}$, where $\Delta_{harq}$ is the HARQ profile value of the to-be-retransmitted data.

In addition, according to the above comparison process by the code rate calculation unit 21, the power calculation unit 22 and the power comparison unit 23, for the QPSK and 16QAM modulation modes, when the power comparison unit 23 determines that the grant calculation powers $\beta''_{e,QPSK}$ and $\beta''_{e,16QAM}$ respectively calculated and acquired for the QPSK and the 16QAM are no larger than the PRRI value, that is, both the QPSK and the 16QAM can use the E-AGCH grant to retransmit data, the power comparison unit is also used to select the smaller one in the $\beta''_{e,QPSK}$ and the $\beta''_{e,16QAM}$ to bear the retransmission of the to-be-retransmitted data.

Based on the above description, the method and device for uplink retransmission decision in accordance with specific embodiments of the present invention can be used in both the TD-SCDMA system and the TD-CDMA system, by analyzing the carried information provided in the E-AGCH and sent by the NodeB, acquire the grant transmission code rate $\lambda_e$, and based on the grant transmission code rate $\lambda_e$, further judge whether the E-AGCH grant power value can be used to retransmit data or not in the pending decision modulation mode, so as to provide a standard uplink retransmission decision method to achieve the technical effects of fast and accurate retransmission decision and guarantee that the to-be-retransmitted data based on the HARQ fast scheduling can be transmitted.

The above description is only preferred embodiments of the present invention, which is defined by the appended claims.

## Claims

1.    A method for uplink retransmission decision, the method comprising:

A. acquiring information carried in an uplink enhanced absolute grant channel, E-AGCH, and record information of to-be-retransmitted data, and according to the carried information and the record information, calculating a grant transmission code rate $\lambda_e$ of the to-be-retransmitted data in a pending decision modulation mode (S101); wherein, the pending decision modulation mode comprises: a quadrature phase shift keying, QPSK, mode and a 16 quadrature amplitude modulation, 16QAM, mode;

B. according to a corresponding relationship diagram of a code rate and a power of the pending decision modulation mode recorded in a network configuration command, calculating a grant calculation power corresponding to the $\lambda_e$ in the pending decision modulation mode (S102);

C. comparing the grant calculation power with power resource related information, PRRI, value in the carried information, when determining that the PRRI value is larger than or equal to the grant calculation power, determining that the to-be-retransmitted data can be retransmitted with the pending decision modulation mode, otherwise, determining that the to-be-retransmitted data cannot be retransmitted with the pending decision modulation mode (S103);

wherein, the step A specifically comprises:

A1. acquiring code channel resource related information, CRRI, slot resource related information, TRRI, and an enhanced uplink dedicated channel control channel number indicator, ENI, in the carried information as well as a data block size $S_e$ of the to-be-retransmitted data in the record information;

A2. calculating a number of bits $R_e$ carried in physical resources of the enhanced uplink dedicated channel in the pending decision modulation mode according to the CRRI, the TRRI and the ENI (S201);

A3. using a formula $\lambda_e = S_e/R_e$ to calculate the $\lambda_e$ according to the $R_e$ and the $S_e$ ;

wherein the method further comprises: in the step A, for the QPSK mode and the 16QAM mode, calculating the number of bits $R_{e1}$ carried in a first physical resource and the number of bits $R_{e2}$ carried in a second physical resource respectively, using the number of bits $R_{e1}$ carried in the first physical resource and the number of bits $R_{e2}$ carried in the second physical resource to calculate the first grant transmission code rate and the second grant transmission code rate respectively; wherein, a formula to calculate the number of bits $R_{e1}$ carried in the first physical resource is:

when

$$SF = N, \quad R_{e1} = (88 \times 16 \times \text{timeslot\_num})/N - (\text{ENI} + 1) \times 34$$

a formula to calculate the number of bits $R_{e2}$ carried in the second physical resource is:
when

$$SF = N, \quad R_{e2} = (176 \times 16 \times \text{timeslot\_num})/N - (\text{ENI} + 1) \times 34 \times 2$$

where *SF* is a spreading factor determined according to the CRRI; timeslot num is the number of transmission code channels determined according to the TRRI; ENI is the number of the enhanced uplink dedicated channel control channels.

2. The method of claim 1, wherein, after step A3, the method further comprises:

A4. comparing the grant transmission code rate $\lambda_e$ with a maximum code rate $\lambda_{max}$ and a minimum code rate $\lambda_{min}$ preset in the network configuration command to judge whether the $\lambda_e$ meets a condition $\lambda_{min} \leq \lambda_e \leq \lambda_{max}$ or not; if the judgment result is yes, determining that the E-AGCH grant meets a data transmission conditions set in the network configuration command; if the judgment result is no, determining that the E-AGCH grant does not meet the data transmission conditions set in the network configuration command.

3. The method of claim 2, wherein, after step A4, the method further comprises:
A5. judging whether the $\lambda_e$ meets a condition $\lambda_e < 1/3$ or not (S205), if the judgment result is no, determining that the E-AGCH grant in the pending decision modulation mode meets a retransmission condition of the to-be-retransmitted data, proceeding to step B (S206); if the judgment result is yes, determining that the E-AGCH grant in the pending decision modulation mode does not meet the retransmission conditions of the to-be-retransmitted data.

4. The method of claim 3, wherein, the step B specifically comprises:

B1. acquiring the corresponding relationship diagram corresponding to the pending decision modulation mode, determining a maximum reference code rate $\lambda_0$, a minimum reference code rate $\lambda_1$, a maximum reference power $\beta_0$ and a minimum reference power $\beta_1$ corresponding to the $\lambda_e$ on the corresponding relationship diagram;

B2. calculating a reference power $\beta'_e$ corresponding to the $\lambda_e$ according to a linear interpolation formula, and the linear interpolation formula is:

$$\beta'_e = \beta_0 + \frac{\beta_1 - \beta_0}{\lambda_1 - \lambda_0}\left(\lambda_e - \lambda_0\right) dB$$

B3. calculating the grant calculation power $\beta''_e$ according to a formula $\beta''_e = \beta'_e + \Delta_{harq}$, where $\Delta_{harq}$ is a hybrid automatic repeat request profile parameter of the to-be-retransmitted data.

5. The method of claim 1, wherein, the method further comprises:
respectively calculating and acquiring a first grant calculation power corresponding to the first grant transmission code rate and a second grant calculation power corresponding to the second grant transmission code rate in step B.

6. The method of claim 1, wherein, in the step C, when determining that both the QPSK mode and the 16QAM mode can be used to retransmit the to-be-retransmitted data, the method further comprises the step of:
comparing the first grant calculation power and the second grant calculation power, and selecting the modulation mode corresponding to a smaller one in the first grant computation power and the second grant computation power to retransmit the to-be-retransmitted data.

7. A uplink retransmission decision device for an uplink retransmission decision, the device comprising a code rate calculation unit (21), a power calculation unit (22) and a power comparison unit (23); wherein,
the code rate calculation unit (21) is used to acquire information carried in an uplink enhanced absolute grant channel, E-AGCH, and record information of to-be-retransmitted data, and to calculate a grant transmission code rate $\lambda_e$ of the to-be-retransmitted data in a pending decision modulation mode according to the carried information and the record information; wherein, the step of calculating a grant transmission code rate $\lambda_e$ of the to-be-retransmitted data in a pending decision modulation mode comprises:

A1. acquiring code channel resource related information, CRRI, slot resource related information, TRRI, and an enhanced uplink dedicated channel control channel number indicator, ENI, in the carried information as well as a data block size $S_e$ of the to-be-retransmitted data in the record information;

A2. calculating a number of bits $R_e$ carried in physical resources of the enhanced uplink dedicated channel in the pending decision modulation mode according to the CRRI, the TRRI and the ENI;

A3. using a formula $\lambda_e = S_e/R_e$ to calculate the $\lambda_e$ according to the $R_e$ and the $S_e$ ;

the power calculation unit (22) is used to calculate a grant calculation power corresponding to the $\lambda_e$ in the pending decision modulation mode according to a corresponding relationship diagram between a code rate and a power recorded in a network configuration command;

the power comparison unit (23) is used to compare the grant calculation power with power resource related information, PRRI, value in the carried information, when determining that the PRRI value is larger than the grant calculation power, determine that the to-be-retransmitted data can be retransmitted with the pending decision modulation mode, otherwise, determine that the to-be-retransmitted data cannot be retransmitted with the pending decision modulation mode;

wherein, the pending decision modulation mode comprises: a quadrature phase shift keying, QPSK, mode and a 16 quadrature amplitude modulation, 16QAM, mode;

the code rate calculation unit (21) is further configured to, for the QPSK mode and the 16QAM mode, calculate the number of bits $R_{e1}$ carried in a first physical resource and the number of bits $R_{e2}$ carried in a second physical resource respectively, use the number of bits $R_{e1}$ carried in the first physical resource and the number of bits $R_{e2}$ carried in the second physical resource to calculate the first grant transmission code rate and the second grant transmission code rate respectively; wherein, a formula to calculate the number of bits $R_{e1}$ carried in the first physical resource is:

when

$$SF = N, \quad R_{e1} = (88 \times 16 \times \text{timeslot\_num})/N - (ENI + 1) \times 34$$

a formula to calculate the number of bits $R_{e2}$ carried in the second physical resource is:
when

$$SF = N, \quad R_{e2} = (176 \times 16 \times \text{timeslot\_num})/N - (ENI + 1) \times 34 \times 2$$

where $SF$ is a spreading factor determined according to the CRRI; timeslot num is the number of transmission code channels determined according to the TRRI; ENI is the number of the enhanced uplink dedicated channel control channels.

8. The device of claim 7, wherein,
when the power comparison unit (23) determines that the PRRI value is larger than both a first grant calculation power acquired in the QPSK mode and a second grant calculation power acquired in the 16QAM mode, the power comparison unit (23) is also used to compare the first grant calculation power and the second grant calculation power, and to select the modulation mode corresponding to a smaller one in the first grant calculation power and the second grant calculation power to retransmit the to-be-retransmitted data.

## Patentansprüche

1. Verfahren zur Entscheidung über Uplink-Neuübertragungen, wobei das Verfahren Folgendes umfasst:

A. Erhalten von Informationen, die in einem verbesserten Uplink-Absolutgewährungskanal, E-AGCH, übertragen werden, und Aufzeichnungsinformationen von neu zu übertragenden Daten, und gemäß den übertragenen Informationen und den Aufzeichnungsinformationen, Berechnen einer Gewährungsübertragungscoderate $\lambda_e$ der neu zu übertragenden Daten in einem Modulationsmodus für ausstehende Entscheidungen (S101); wobei der Modulationsmodus für ausstehende Entscheidungen Folgendes umfasst: einen Quadraturphasenumtastungs-, QPSK, -Modus und einen 16-Quadraturamplitudenmodulations-, 16QAM, - Modus;
B. gemäß einem entsprechenden Verhältnisdiagramm einer Coderate und einer Leistung des Modulationsmodus für ausstehende Entscheidungen, das in einem Netzwerkkonfigurationsbefehl aufgezeichnet ist, Berechnen einer Gewährungsrechenleistung entsprechend der $\lambda_e$ in dem Modulationsmodus für ausstehende Entscheidungen (S102);
C. Vergleichen der Gewährungsrechenleistung mit einem Wert für leistungsressourcenbezogene Informationen, PRRI, in den übertragenen Informationen, wenn bestimmt wird, dass der PRRI-Wert größer als oder gleich groß wie die Gewährungsrechenleistung ist, Bestimmen, dass die neu zu übertragenen Daten mit dem Modulationsmodus für ausstehende Entscheidungen neu übertragen werden können, ansonsten Bestimmen, dass die neu zu übertragenden Daten nicht mit dem Modulationsmodus für ausstehende Entscheidungen neu übertragen werden können (S103);

wobei der Schritt A insbesondere Folgendes umfasst:

A1. Erhalten von codekanalressourcenbezogenen Informationen, CRRI, schlitzressourcenbezogenen Informationen, TRRI und einem Steuerkanalzahlindikator für einen verbesserten dedizierten Uplink-Kanal, ENI, in den übertragenen Informationen sowie einer Datenblockgröße $S_e$ der neu zu übertragenden Daten in den Aufzeichnungsinformationen;
A2. Berechnen einer Anzahl an Bits $R_e$, die in physikalischen Ressourcen des verbesserten dedizierten Uplink-Kanals in dem Modulationsmodus für ausstehende Entscheidungen übertragen werden, gemäß den CRRI, den TRRI und dem ENI (S201);
A3. Verwenden einer Formel $\lambda_e = S_e R_e$, um die $\lambda_e$ gemäß dem $R_e$ und dem $S_e$ zu berechnen;

wobei das Verfahren ferner Folgendes umfasst: in dem Schritt A, für den QPSK-Modus und den 16QAM-Modus, Berechnen jeweils der Anzahl an Bits $R_{e1}$, die in einer ersten physikalischen Ressource übertragen werden, und der Anzahl an Bits $R_{e2}$, die in einer zweiten physikalischen Ressource übertragen werden, unter Verwendung der Anzahl an Bits $R_{e1}$, die in der ersten physikalischen Ressource übertragen werden, und der Anzahl an Bits $R_{e2}$, die in der zweiten physikalischen Ressource übertragen werden, um jeweils die erste Gewährungsübertragungscoderate und die zweite Gewährungsübertragungscoderate zu berechnen; wobei eine Formel zum Berechnen der Anzahl an Bits $R_{e1}$, die in der ersten physikalischen Ressource übertragen werden, wie folgt ist: wenn *SF = N*, $R_{e1}$ = (88 x 16 x timeslot_num)/N - (ENI + 1) x 34 eine Formel zum Berechnen der Anzahl an Bits $R_{e2}$, die in der zweiten physikalischen Ressource übertragen werden, wie folgt ist: wenn *SF = N*, $R_{e2}$ = (176 x 16 x timeslot_num)/N - (ENI + 1) x 34 x 2 wobei SFein Spreizfaktor ist, der gemäß den CRRI bestimmt wird; timeslot_num die Anzahl an Übertragungscodekanälen ist, die gemäß den TRRI bestimmt wird; ENI die Anzahl an Steuerkanälen für einen verbesserten dedizierten Uplink-Kanal ist.

2. Verfahren nach Anspruch 1, wobei nach Schritt A3 das Verfahren ferner Folgendes umfasst:

   A4. Vergleichen der Gewährungsübertragungscoderate $\lambda_e$ mit einer maximalen Coderate $\lambda_{max}$ und einer minimalen Coderate $\lambda_{min}$, die vorab in dem Netzwerkkonfigurationsbefehl festgelegt werden, um zu beurteilen, ob die $\lambda_e$ eine Bedingung $\lambda_{min} \leq \lambda_e \leq \lambda_{max}$ erfüllt oder nicht;
   wenn das Beurteilungsergebnis Ja ist, Bestimmen, dass die E-AGCH-Gewährung Datenübertragungsbedingungen erfüllt, die in dem Netzwerkkonfigurationsbefehl festgelegt sind; wenn das Beurteilungsergebnis Nein ist, Bestimmen, dass die E-AGCH-Gewährung nicht die Datenübertragungsbedingungen erfüllt, die in dem Netzwerkkonfigurationsbefehl festgelegt sind.

3. Verfahren nach Anspruch 2, wobei nach Schritt A4 das Verfahren ferner Folgendes umfasst:
   A5. Beurteilen, ob die $\lambda_e$ eine Bedingung $\lambda_e$ < 1/3 erfüllt oder nicht (S205), wenn das Beurteilungsergebnis Nein ist, Bestimmen, dass die E-AGCH-Gewährung in dem Modulationsmodus für ausstehende Entscheidungen eine Neuübertragungsbedingung der neu zu übertragenden Daten erfüllt, Weitergehen zu Schritt B (S206); wenn das Beurteilungsergebnis Ja ist, Bestimmen, dass die E-AGCH-Gewährung in dem Modulationsmodus für ausstehende Entscheidungen nicht die Neuübertragungsbedingungen der neu zu übertragenden Daten erfüllt.

4. Verfahren nach Anspruch 3, wobei der Schritt B insbesondere Folgendes umfasst:

   B1. Erhalten des entsprechenden Verhältnisdiagramms entsprechend dem Modulationsmodus für ausstehende Entscheidungen, Bestimmen einer maximalen Referenzcoderate $\lambda_0$, einer minimalen Referenzcoderate $\lambda_1$, einer maximalen Referenzleistung $\beta_0$ und einer minimalen Referenzleistung $\beta_1$ entsprechend der $\lambda_e$ auf dem entsprechenden Verhältnisdiagramm;
   B2. Berechnen einer Referenzleistung $\beta'_e$ entsprechend der $\lambda_e$ gemäß einer linearen Interpolationsformel, und wobei die lineare Interpolationsformel wie folgt lautet:

$$\beta'_e = \beta_0 + \frac{\beta_1 - \beta_0}{\lambda_1 - \lambda_0}(\lambda_e - \lambda_0)dB$$

   B3. Berechnen der Gewährungsrechenleistung $\beta'_e$ gemäß einer Formel $\beta''_e = \beta'_e + \Delta_{harq}$, wobei $\Delta_{harq}$ ein automatischer Hybrid-Wiederholungsanforderungsprofilparameter der neu zu übertragenden Daten ist.

5. Verfahren nach Anspruch 1, wobei das Verfahren ferner Folgendes umfasst:
   jeweiliges Berechnen und Erhalten einer ersten Gewährungsrechenleistung entsprechend der ersten Gewährungsübertragungscoderate und einer zweiten Gewährungsrechenleistung entsprechend der zweiten Gewährungsübertragungscoderate in Schritt B.

6. Verfahren nach Anspruch 1, wobei in dem Schritt C, wenn bestimmt wird, dass sowohl der QPSK-Modus als auch der 16QAM-Modus verwendet werden können, um die neu zu übertragenden Daten neu zu übertragen, das Verfahren ferner folgenden Schritt umfasst:
   Vergleichen der ersten Gewährungsrechenleistung und der zweiten Gewährungsrechenleistung und Auswählen des Modulationsmodus entsprechend einer kleineren bei der ersten Gewährungsrechenleistung und der zweiten Gewährungsrechenleistung, um die neu zu übertragenden Daten neu zu übertragen.

7. Uplink-Neuübertragungsentscheidungsvorrichtung für eine Entscheidung über Uplink-Neuübertragungen, wobei die Vorrichtung eine Coderatenberechnungseinheit (21), eine Leistungsberechnungseinheit (22) und eine Leistungsvergleichseinheit (23) umfasst; wobei

die Coderatenberechnungseinheit (21) verwendet wird, um Informationen, die in einem verbesserten Uplink-Absolutgewährungskanal, E-AGCH, übertragen werden, und Aufzeichnungsinformationen von neu zu übertragenden Daten zu erhalten und eine Gewährungsübertragungscoderate $\lambda_e$ der neu zu übertragenden Daten in einem Modulationsmodus für ausstehende Entscheidungen gemäß den übertragenen Informationen und den Aufzeichnungsinformationen zu berechnen; wobei der Schritt des Berechnens einer Gewährungsübertragungscoderate $\lambda_e$ der neu zu übertragenden Daten in einem Modulationsmodus für ausstehende Entscheidungen Folgendes umfasst:

A1. Erhalten von codekanalressourcenbezogenen Informationen, CRRI, schlitzressourcenbezogenen Informationen, TRRI, und einem Steuerkanal-Zahl-Indikator für einen verbesserten dedizierten Uplink-Kanal, ENI, in den übertragenen Informationen sowie einer Datenblockgröße $S_e$ der neu zu übertragenden Daten in den Aufzeichnungsinformationen;

A2. Berechnen einer Anzahl an Bits $R_e$, die in physikalischen Ressourcen des verbesserten dedizierten Uplink-Kanals in dem Modulationsmodus für ausstehende Entscheidungen übertragen werden, gemäß den CRRI, den TRRI und dem ENI;

A3. Verwenden einer Formel $\lambda_e = S_e/R_e$, um die $\lambda_e$ gemäß dem $R_e$ und dem $S_e$ zu berechnen;

wobei die Leistungsberechnungseinheit (22) verwendet wird, um eine Gewährungsrechenleistung entsprechend der $\lambda_e$ in dem Modulationsmodus für ausstehende Entscheidungen gemäß einem entsprechenden Verhältnisdiagramm zwischen einer Coderate und einer Leistung, das in einem Netzwerkkonfigurationsbefehl aufgezeichnet ist, zu berechnen;

wobei die Leistungsvergleichseinheit (23) verwendet wird, um die Gewährungsrechenleistung mit einem Wert für leistungsressourcenbezogene Informationen, PRRI, in den übertragenen Informationen zu vergleichen, wenn bestimmt wird, dass der PRRI-Wert größer als die Gewährungsrechenleistung ist, Bestimmen, dass die neu zu übertragenden Daten mit dem Modulationsmodus für ausstehende Entscheidungen neu übertragen werden können, ansonsten Bestimmen, dass die neu zu übertragenden Daten nicht mit dem Modulationsmodus für ausstehende Entscheidungen neu übertragen werden können;

wobei der Modulationsmodus für ausstehende Entscheidungen Folgendes umfasst: einen Quadraturphasenumtastungs-, QPSK, - Modus und einen 16-Quadraturamplitudenmodulations-, 16QAM, - Modus;

wobei die Coderatenberechnungseinheit (21) ferner konfiguriert ist, um, für den QPSK-Modus und den 16QAM-Modus, jeweils die Anzahl an Bits $R_{e1}$, die in einer ersten physikalischen Ressource übertragen werden, und die Anzahl an Bits $R_{e2}$ die in einer zweiten physikalischen Ressource übertragen werden, zu berechnen, die Anzahl an Bits $R_{e1}$,

die in der ersten physikalischen Ressource übertragen werden, und die Anzahl an Bits $R_{e2}$, die in der zweiten physikalischen Ressource übertragen werden, zu verwenden, um jeweils die erste Gewährungsübertragungscoderate und die zweite Gewährungsübertragungscoderate zu berechnen; wobei eine Formel zum Berechnen der Anzahl an Bits $R_{e1}$, die in der ersten physikalischen Ressource übertragen werden, wie folgt lautet:

wenn $SF = N$, $R_{e1} = (88 \times 16 \times \text{timeslot\_num})/N - (ENI + 1) \times 34$ eine Formel zum Berechnen der Anzahl an Bits $R_{e2}$, die in der zweiten physikalischen Ressource übertragen werden, wie folgt lautet:

wenn

$$SF = N, R_{e2} = (176 \times 16\ \text{timeslot\_num})/N - (ENI + 1) \times 34 \times 2$$

wobei SFein Spreizfaktor ist, der gemäß den CRRI bestimmt wird; timeslot\_num die Anzahl an Übertragungscodekanälen ist, die gemäß den TRRI bestimmt wird; ENI die Anzahl der Steuerkanäle für einen verbesserten dedizierten Uplink-Kanal ist.

8. Vorrichtung nach Anspruch 7, wobei,

wenn die Leistungsvergleichseinheit (23) bestimmt, dass der PRRI-Wert größer als sowohl eine erste Gewährungsrechenleistung, die in dem QPSK-Modus erhalten wird, als auch eine zweite Gewährungsrechenleistung, die in dem 16QAM-Modus erhalten wird, ist, die Leistungsvergleichseinheit (23) auch verwendet wird, um die erste Gewährungsrechenleistung und die zweite Gewährungsrechenleistung zu vergleichen und den Modulationsmodus entsprechend einer kleineren bei der ersten Gewährungsrechenleistung und der zweiten Gewährungsrechenleistung auszuwählen, um die neu zu übertragenden Daten neu zu übertragen.

**Revendications**

1.  Procédé de décision de retransmission en liaison montante, le procédé comprenant de :

    A. Acquérir une information transportée dans un canal d'attribution absolue améliorée en liaison montante, E-AGCH, et enregistrer une information de données à retransmettre et selon l'information transportée et l'information enregistrée, calculer un taux de codage de transmission d'attribution $\lambda_e$ des données à retransmettre dans un mode de modulation de décision en attente (S101) ; dans lequel le mode de modulation de décision en attente comprend : un mode de modulation par déplacement de phase quadrivalente, QPSK, et un mode de modulation d'amplitude à 16 quadrature, 16QAM ;
    B. Selon un diagramme de relation correspondant d'un taux de codage et d'une puissance du mode de modulation de décision en attente enregistré dans une commande de configuration de réseau, calculer une puissance de calcul d'attribution correspondant au $\lambda_e$ dans le mode de modulation de décision en attente (S102) ;
    C. Comparer la puissance de calcul d'attribution avec une valeur d'information relative aux ressources de puissance, PRRI, dans l'information transportée, lors de la détermination que la valeur PRRI est supérieure ou égale à la puissance de calcul d'attribution, déterminer que les données à retransmettre peuvent être retransmises avec le mode de modulation de décision en attente, sinon, déterminer que les données à retransmettre ne peuvent pas être retransmises avec le mode de modulation de décision en attente (S103) ;

    dans lequel l'étape A comprend spécifiquement de :

    A1. Acquérir une information relative à une ressource d'intervalle TRRI d'information relative aux ressources de canal de codage CRRI, et un indicateur de numéro de canal de commande de canal dédié en liaison montante améliorée, ENI, dans l'information transportée ainsi qu'une taille de bloc de données $S_e$ des données à retransmettre dans l'information enregistrée ;
    A2. Calculer un nombre de bits $R_e$ transportés dans les ressources physiques du canal dédié en liaison montante améliorée dans le mode de modulation de décision en attente selon la CRRI, TRRI et l'ENI (S201) ;
    A3. Utiliser une formule $\lambda_e = S_e R_e$ pour calculer le $\lambda_e$ selon le $R_e$ et le $S_e$ ;

    dans lequel le procédé comprend en outre de : à l'étape A, pour le mode QPSK et le mode 16QAM, calculer le nombre de bits transportés dans une première ressource physique $R_{e1}$ et le nombre de bits transportés dans une seconde ressource physique $R_{e2}$ respectivement, en utilisant le nombre de bits $R_{e1}$ transporté dans la première ressource physique et le nombre de bits $R_{e2}$ transporté dans la seconde ressource physique pour calculer le premier taux de codage de transmission d'attribution et le second taux de codage de transmission d'attribution respectivement ; dans lequel une formule pour calculer le nombre de bits transportés dans la première ressource physique $R_{e1}$ est :
    lorsque

    $$\text{lorsque } SF = N, R_{e1} = (88 \times 16 \times \text{timeslot\_num})/N - (ENI + 1) \times 34$$

    une formule pour calculer le nombre de bits transportés dans la seconde ressource physique $R_{e2}$ est :
    lorsque $SF = N$, $R_{e2} = (176 \times 16 \times \text{timeslot\_num})/N - (ENI + 1) \times 34 \times 2$ où SF et un facteur d'étalement déterminé selon la CRRI ; timeslot\_num est le nombre de canaux de codage de transmission déterminée selon la TRRI ; ENI est le nombre de canaux de commande de canal dédié en liaison montante améliorée.

2.  Procédé selon la revendication 1, dans lequel, après l'étape A3, le procédé comprend en outre de :
    A4. Comparer le taux de codage de transmission d'attribution $\lambda_e$ avec un taux de codage maximal $\lambda_{max}$ et un taux de codage minimal $\lambda_{min}$ préréglé dans la commande de configuration de réseau pour estimer si $\lambda_e$ remplit une condition $\lambda_{min} \leq \lambda_e \leq \lambda_{max}$ ou non ;
    si le résultat de l'estimation est oui, déterminer que l'attribution E-AGCH remplit une condition de transmission de données réglées dans la commande de configuration de réseau ; si le résultat de l'estimation est non, déterminer que l'attribution E-AGCH ne remplit pas les conditions de transmission de données réglées dans la commande de configuration de réseau.

3.  Procédé selon la revendication 2, dans lequel, après l'étape A4, le procédé comprend en outre de :
    A5. Estimer si le $\lambda_e$ remplit une condition $\lambda_e < 1/3$ ou non (S205), si le résultat de l'estimation est non, déterminer que l'attribution E-AGCH dans le mode de modulation de décision en attente remplit une condition de retransmission des données à retransmettre, continuer à l'étape B (S206) ; si le résultat de l'estimation est oui, déterminer que l'attribution E-AGCH dans le mode de modulation de décision en attente ne remplit pas les conditions de retransmission de données à retransmettre.

**4.** Procédé selon la revendication 3, dans lequel l'étape B comprend spécifiquement de :

B1. Acquérir le diagramme de relation correspondant au mode de modulation de décision en attente, déterminer un taux de codage de référence maximal $\lambda_0$, un taux de codage de référence minimal $\lambda_1$, une puissance de référence maximale $\beta_0$ et une puissance de référence minimale $\beta_1$ correspondant à $\lambda_e$ sur le diagramme de relation correspondant ;
B2. Calculer une puissance de référence $\beta'_e$ correspondant au $\lambda_e$ selon une formule d'interpolation linéaire et la formule d'interpolation linéaire est :

$$\beta'_e = \beta_0 + \frac{\beta_1 - \beta_0}{\lambda_1 - \lambda_0}(\lambda_e - \lambda_0)dB$$

B3. Calculer la puissance de calcul d'attribution $\beta_e$ selon une formule $\beta''_e = \beta'_e + \Delta_{harq}$, où $\Delta_{harq}$ est un paramètre de profil de demande de répétition automatique hybride des données à retransmettre.

**5.** Procédé selon la revendication 1, dans lequel le procédé comprend en outre de :
respectivement calculer et acquérir une première puissance de calcul d'attribution correspondant au premier taux de codage de transmission d'attribution et une seconde puissance de calcul d'attribution correspondant au second taux de codage de transmission d'attribution à l'étape B.

**6.** Procédé selon la revendication 1, dans lequel, à l'étape C, lors de la détermination que à la fois le mode QPSK et le mode 16QAM peuvent être utilisés pour retransmettre les données à retransmettre, le procédé comprend en outre l'étape consistant à :
comparer la première puissance de calcul d'attribution et la seconde puissance de calcul d'attribution et sélectionner le mode de modulation correspondant à une puissance plus petite de la première puissance de calcul informatique d'attribution et la seconde puissance de calcul informatique d'attribution pour retransmettre les données à retransmettre.

**7.** Dispositif de décision de retransmission en liaison montante pour une décision de retransmission en liaison montante, le dispositif comprenant une unité de calcul de taux de codage (21), une unité de calcul de puissance (22) et une unité de comparaison de puissance (23) ; dans lequel
l'unité de calcul de taux de codage(21) est utilisée pour acquérir une information transportée dans un canal d'attribution absolue améliorée en liaison montante, E-AGCH, et enregistrer une information de données à retransmettre, et calculer un taux de codage de transmission d'attribution $\lambda_e$ des données à retransmettre dans un mode de modulation de décision en attente selon l'information transportée et l'information enregistrée ;
dans lequel l'étape de calcul d'un taux de codage de transmission d'attribution $\lambda_e$ des données à retransmettre dans un mode de modulation de décision en attente comprend de :

A1. Acquérir une information relative à une ressource d'intervalle TRRI d'information relative aux ressources de canal de codage CRRI, et un indicateur de numéro de canal de commande de canal dédié en liaison montante améliorée, ENI, dans l'information transportée ainsi qu'une taille de bloc de données $S_e$ des données à retransmettre dans l'information enregistrée ;
A2. Calculer un nombre de bits $R_e$ transportés dans les ressources physiques du canal dédié en liaison montante améliorée dans le mode de modulation de décision en attente selon la CRRI, TRRI et l'ENI ;
A3. Utiliser une formule $\lambda_e = S_e/R_e$ pour calculer le $\lambda_e$ selon le $R_e$ et le $S_e$ ;

l'unité de calcul de puissance (22) est utilisée pour calculer une puissance de calcul d'attribution correspondant au $\lambda_e$ dans le mode de modulation de décision en attente selon un diagramme de relation correspondant entre un taux de codage et une puissance enregistrée dans une commande de configuration de réseau ;
l'unité de comparaison de puissance (23) est utilisée pour comparer la puissance de calcul d'attribution avec une valeur d'information relative aux ressources de puissance PRRI dans l'information transportée, lors de la détermination que la valeur PRRI est supérieure à la puissance de calcul d'attribution, déterminer que les données à retransmettre peuvent être retransmises avec le mode de modulation de décision en attente, sinon, déterminer que les données à retransmettre ne peuvent pas être retransmises avec le mode de modulation de décision en attente ; dans lequel le mode de modulation de décision en attente comprend :

un mode de modulation par déplacement de phase quadrivalente, QPSK, et un mode de modulation d'amplitude à 16 quadrature, 16QAM ;

l'unité de calcul de taux de codage (21) est en outre configurée pour, pour le mode QPSK et le mode 16QAM, calculer le nombre de bits transportés dans une première ressource physique $R_{e1}$ et le nombre de bits transportés dans une seconde ressource physique $R_{e2}$ respectivement, en utilisant le nombre de bits $R_{e1}$ transportés dans la première ressource physique et le nombre de bits $R_{e2}$ transportés dans la seconde ressource physique pour calculer le premier taux de codage de transmission d'attribution et le second taux de codage de transmission d'attribution respectivement ; dans lequel une formule pour calculer le nombre de bits transportés dans la première ressource physique $R_{e1}$ est :
lorsque

$$\text{lorsque } SF = N,\ R_{e1} = (88 \times 16 \times \text{timeslot\_num})/N - (ENI + 1) \times 34$$

une formule pour calculer le nombre de bits transportés dans la seconde ressource physique $R_{e2}$ est :
lorsque $SF$ = N, $R_{e2}$ = (176 x 16 timeslot_num)/N - (ENI + 1) x 34 x 2 où SF et un facteur d'étalement déterminé selon la CRRI ; timeslot_num est le nombre de canaux de codage de transmission déterminée selon la TRRI ; ENI est le nombre de canaux de commande de canal dédié en liaison montante améliorée.

8.  Dispositif selon la revendication 7, dans lequel :
lorsque l'unité de comparaison de puissance (23) détermine que la valeur PRRI est supérieure à la fois à une première puissance de calcul d'attribution dans le mode QPSK et une seconde puissance de calcul d'attribution acquise dans le mode 16QAM, l'unité de comparaison de puissance (23) est aussi utilisée pour comparer la première puissance de calcul d'attribution et la seconde puissance de calcul d'attribution et sélectionner le mode de modulation correspondant à une puissance plus petite de la première puissance de calcul d'attribution et la seconde puissance de calcul d'attribution pour retransmettre les données à retransmettre.

E-AGCH

in accordance with the information carried in the E-AGCH and the record information of the to-be-retransmitted data MAC-e PDU, calculate the grant transmission code rate of the to-be-retransmitted data in the set modulation mode ⟍ S101

calculate the retransmission calculation power corresponding to the grant transmission code rate in a determined decision modulation mode according to the corresponding relationship diagram between the code rate and the power in the determined modulation mode recorded in the network configuration command ⟍ S102

compare the grant calculation power with the PRRI value in the carried information to judge whether the determined modulation mode can be used to retransmit the to-be-retransmitted data or not ⟍ S103

FIG. 1

E-AGCH

According to the CRRI, the TRRI and the ENI in the E-AGCH, calculate the number of bits Re carried in the physical resource of the uplink enhanced dedicated channel in the pending decision modulation mode —S201

Acquire the to-be-retransmitted data sequence in the buffer at the UE side, extract the to-be-retransmitted data from the oldest process. —S202

According to the Re and the data block size of the to-be-retransmitted data, calculate the grant transmission code rate —S203

Compare the preset maximum rate and the minimum rate in the network configuration command with the grant transmission code rate to judge whether the grant transmission code rate is between the maximum code rate and the minimum code rate or not —S204

No

Yes

Judge whether the grant transmission code rate is less than one third or not —S205

Yes

No

Determine the maximum reference code rate, the minimum reference code rate, the maximum reference power and the minimum reference power corresponding to the grant transmission code rate in the corresponding relationship diagram —S206

Calculate the reference power corresponding to the grant transmission code rate —S207

Calculate the grant calculation power needed to retransmit the to-be-retransmitted data. —S208

S211

Judge whether the PRRI value is greater than the grant calculation power or not —S209

No

Judge whether all the to-be-retransmitted data have been calculated or not

No

Yes

Yes

Determine that the pending decision modulation mode can be used to retransmit the data, and retransmit the data —S210

S212

Transmit new data

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *E-AGCH structure in CPC for LCR TDD,* 04 November 2008